# EUROPEAN PATENT APPLICATION

(11) **EP 4 280 437 A1**
(43) Date of publication of application: **22.11.2023**
(21) Application number: 22174515.1
(22) Date of filing: 20.05.2022
(51) Int. Cl.: H02K 21/12, H02K 21/14, H02K 21/20, H02K 37/12, H02K 37/14, H02K 37/18, H02K 21/24, H02K 3/52

(54) **TWO PHASE STEPPER MOTOR**

(71) Applicant: Faulhaber Precistep SA, 2300 La Chaux-de-Fonds (CH)
(72) Inventor: Poliakine, Jasha, 2300 La Chaux-de-Fonds (CH); Laoun, Magdi, 2300 La Chaux-de-Fonds (CH); Al-Tayar, Maimun, 2300 La Chaux-de-Fonds (CH)
(74) Representative: P&TS SA (AG, Ltd.)

(57) **Abstract**

The invention concerns a two-phased stepper motor (100) comprising a central shaft (1), two electromagnetic coils (3), two ferromagnetic stators (2A, 2B), each accommodating an electromagnetic coil (3), a rotor (4) rotationally fixed on said central shaft (1) and positioned between the two stators (2A, 2B), said rotor (4) having two faces, each face being magnetized, and a spacer (5) arranged between the stators (2A, 2B) for maintaining the two stators at a fixed minimal distance from each other. The central shaft (1) passes through each of the two coils (3) such as to permit a rotation of said central shaft (1) within said stators (2A, 2B). Each of the two stators (2A, 2B) comprises an annular portion arranged around one of the coils and at least two teeth (250) extending from the annular portion, each tooth comprising a radial portion (251) extending radially between one of the coils (3) and the rotor (4), in direction of the central shaft (1).

## Description

The present invention concerns stepper motors, in particular a two-phase stepper motors.

### Related art

Stepper motors, in particular compact stepper motors, find their application in equipment requiring a high degree of precision. The angular rotation of these motors is controlled by means of pulse signals rendering them suitable for a wide variety of electrical equipment. Stepper motors are for example commonly found in medical devices, for example dosage devises, as well as in optical equipment, such as microscopes, or cameras.

Different types of stepper motors are known in the art, each striking a different balance between speed and torque.

Variable Reluctance (VR) type stepper motors for example comprise a stator with a number of phases and a rotor, each providing teeth where magnetic forces are concentrated. Angular rotation of the rotor is driven by the attraction of the teeth of the rotor to the opposite magnetized poles on the stator teeth. VR-type motors generally do not contain permanent magnets and achieve relatively good speed. However, one of their disadvantages is a suboptimal torque control.

Permanent magnet (PM) type stepper motors achieve a relatively low speed compared to VR type stepper motors, but a better torque.

PM stepper motors with disc-shaped rotors, wherein the faces of the rotors are magnetised alternatingly, have been described previously.

US5982058A for example describes a two-phase stepper motor having a shaft onto which two rotors with a first and a second permanent magnet each having a plurality of north and south pole magnet regions, are rotationally fixed. A stator is loosely mounted around the shaft and positioned between the opposing magnets. The stator has a disc-shaped yoke and structural poles extending away from the yoke, parallel to the shaft toward the rotors. Electromagnetic wire coils are wrapped around these structural poles, such as to allow the formation of a plurality of electromagnets.

Alternative executions of PM stepper motors with cylindrical rotors are also known in the art. The cylindrical rotors are magnetized axially, such that north and south poles alternate around the lateral cylindrical surface of the rotor. Portions of the stator and/or an electromagnetic coil are generally arranged around the lateral surface of the cylindrical rotor, such as to interact with the alternatingly polarised lateral surface.

For example, EP1482626A1 describes a PM stepper motor with a cylindrical rotor assembly having its outer circumference multi-pole magnetized. The stator assembly comprises a first stator unit and a second stator unit, each having yokes with a plurality of teeth formed along one side and bent towards the other yoke in the assembled motor. The teeth of the two yokes are connected to each other, with interposed spacers. The teeth align with the magnetized outer circumference of the cylindrical rotor assembly.

The invention sets out to find a compact PM stepper motor, preferably of cylindrical shape, which can provide a high torque, as well as a high number of angular positions.

### Short disclosure of the invention

It is an aim of the present invention to provide a compact permanent stepper motor which is powerful, and capable of refined angular positioning without compromising on its compact size.

It is another aim of the invention improve torque of a compact permanent stepper motor.

Preferably, the stepper motor should be capable of providing higher torque than conventional PM stepper motors of the same or similar size, having the same or similar stepping angles.

It is another aim of this invention to provide an alternative arrangement for a powerful stepper motor of compact size.

According to the invention, one or more of these aims are attained by the object of the attached claims, and especially by the independent claims. Further optional embodiments are provided in the dependent claims.

In particular, one or more of these aims are achieved by a stepper motor comprising a central shaft, two electromagnetic coils, two ferromagnetic stators each accommodating an electromagnetic coil. The central shaft of the motor passes through each of the two coils such as to permit a rotation of said shaft within the stator.

The electromagnetic coils are preferably copper coils of isolated copper wires.

The stepper motor further comprises a rotor mounted on said central shaft, such that it is rotationally fixed to the shaft. The rotor is positioned between the two stators. The rotational movement of the central axis is driven by the angular displacement of the rotor.

Each of the two stators comprises an annular portion arranged around one of the coils and at least two teeth extending from the annular portion. Each tooth comprises a radial portion extending radially in direction of the central shaft. The radial portion of the stator teeth are layered between the electromagnetic coil accommodated in the stator and a face of the rotor.

The electromagnetic coils accommodated by the stator can fill the substantially entire inner cylindrical volume enclosed by the stator, so as to maximize the volume of coil inside the stator.

Since the stator teeth do not protrude into the inner cylindrical volume defined by the stator, the coils may be wound in form of a cylinder to a diameter which matches the inner diameter of the cylindrical stator.

The coils may extend from its core to the inner surface of the cylindrical stator wall.

The arrangement of stator, the stator teeth and the magnetic rotor of this invention allows to optimise the available space for the wound electromagnetic wire on either side of the magnetic rotor.

The arrangement therefore allows for an increase of the volume of electromagnetic wire, for example copper wire, comprised in the coil in respect of the volume of the magnet. This increased ratio contributes to a better torque of the motor. Moreover, the amount of electromagnetic wire in respect of the volume of ferromagnetic material is also increased, further favouring a high torque.

In addition, the arrangement of this invention allows for an increase in the number of windings of the electromagnetic wire in the coil.

Different from conventional stepper motors, where a plurality of coils are wound around a plurality of teeth, protrusions, poles or other structural elements of the stator to provide alternating magnetic poles, the number of windings of the coil in this invention is entirely independent of the number of teeth, respectively the number of structures providing alternating magnetic poles.

Preferably, no teeth, or radial protrusions extend into the space delimitated by the stator walls. The stator therefore allows for an increase in the packaging weight of the electromagnetic coil windings in the motor.

The magnitude of the magnetic field strength is directly proportional to the number of windings of the electromagnetic coil. The more efficient packaging of the coil in the stepper motor results in an increase of torque. The added torque provides for a more powerful stepper motor without having to increase current or increase the size of the motor.

The teeth of the stator may further comprise a longitudinal portion extending as a continuation of the annular portion of the stator parallel to the central shaft towards the rotor. In this embodiment the radial portion of the teeth is substantially perpendicular to the longitudinal portion.

Preferably, the inner diameter of the cylindrical volume encompassed by the annular portion of the stator is the same as the inner diameter defined by the longitudinal portion of the stator teeth.

The inner diameter of the stator is preferably constant over the length of the stator. Moreover, the inner diameter of the stator is preferably also constant in radial direction of the lateral surface. This means that no other structural features of the stator project into the inner cylindrical volume of the stator.

The two stators are preferably substantially identical. The teeth of one stator are preferably angularly offset with respect to the teeth of the other stator.

The motor further comprises a spacer arranged between the stators for maintaining the two stators at a fixed minimal distance from each other. The spacer should be dimensioned to prevent the stators from contacting the face of the rotor. The spacer is preferably at least partially made from isolating material, such as a plastic or a composite isolating material.

The spacer preferably comprises an annular portion. The annular portion is arranged around the rotor.

The spacer is preferably arranged to maintain an angular offset of the teeth of the two stators, such that the angular position of the stators in respect to each other is fixed. The spacer may for example have protrusions for engaging between each pair of longitudinal portions of adjacent stator teeth. These protrusions preferably project from either side of the annular portion parallel to the central axis, such that at least one protrusion on either side engages with a compatible recess between two adjacent teeth in one of the stators.

A stator comprises a stator yoke with a cylindrical portion. A stator may further comprise a flange with a hollow cylindrical member having a smaller diameter than the stator yoke. The cylindrical flange member is inserted axially into the stator yoke for mounting the coil. In this embodiment the central shaft passes axially through the cylindrical flange member. The cylindrical flange member may be inserted through the centre of the coil. The coil may also be wound about the outer surface of the cylindrical flange member.

The stator may further comprise a covering member dimensioned to cover the face of the stator opposite the stator teeth. This face, which is the second face of the stator, is facing away from the rotor in the assembled stepper motor. The covering member may be connected to the cylindrical flange member. A covering member may however also be contained in embodiments of stators without an axially arranged cylindrical flange member.

The covering member provides a surface through which the motor can be connected to external structures or elements. The covering member may for example be arranged for fixing the motor to a support means. The covering member may also be arranged for attaching gear boxes and/or adapters to the motor.

The rotor has two faces, each face being magnetised. The radial portions of the stator teeth are arranged between the coils and the rotor, such as to interact with the magnetised faces of the rotor.

Since the stators including the teeth and the rotor are arranged sequentially in axial direction of the rotor, the volume of the magnetic rotor of a defined thickness can be maximized to fit the cylindrical shape of the motor. This arrangement provides a distinct advantage over PM stepper motors known in the art, in which stator components, for example coils are arranged around the lateral surface of the rotor, thus adding to the outer diameter of the motor.

The arrangement of the teeth in respect of the rotor in this invention therefore allows to maximise the diameter of the magnetic rotor for a given diameter of the stepper motor.

Moreover, since the ferromagnetic stator teeth interact with the two faces of the rotor, no longitudinal magnetisation along the lateral surface of the rotor is required to drive angular displacement of the rotor. As a result, the rotor may be disc shaped. A disc-shaped rotor further favours a reduced length of the overall motor.

In a preferred embodiment the rotor comprises two magnetic rotor discs, each discs comprising an even number of disc sectors. The discs are magnetised, such that each magnetic south poles and magnetic north poles alternate over the disc sectors over each face of a rotor disc. The disc sectors are each axially magnetized over the depth of the rotor disc, such that one pole, for example the south pole, is located on one surface of a disc sector and the other pole, for example the north pole is located on the opposite surface of the disc sector.

The two magnetic rotor discs are positioned with a fixed angular shift in respect of each other. Preferably, each disc sector of one rotor disk completely superposes a disc sector of the other rotor disc. The surfaces of aligned disc sectors may carry the same magnetic pole, or the opposite magnetic pole. This means that a sector of one rotor disc which has an axial N-S polarisation may be aligned with a sector of the other rotor disc which has either an axial N-S or an axial S-N polarisation

The disc sectors of a magnetic rotor disc may be equal to double the number of radial portions of stator teeth. All disc sectors of the ferromagnetic teeth of a stator should be positioned to interact with disc sectors of the rotor discs, which are each providing the same magnetic pole, i.e. either the south pole or the north pole.

In a preferred embodiment a central rotor disc is layered between the two magnetic rotor discs. The central disc is arranged to fix the magnetic rotor discs in their angular position. Preferably, the central disc is made of a ferromagnetic material, such a steel or iron. The ferromagnetic central disc participates in the magnetic field of the magnetic rotor discs. Specifically, the ferromagnetic central disc helps to direct the magnetic flux of the magnets radially towards the central shaft of the rotor.

Each of the electromagnetic stator coils provides a magnetic phase when a current is flows to it. The rotational movement of the two-phase stepper motor is driven by alternating the phases of the stator. Upon excitement by an electrical current, the coils temporarily polarize the stator teeth to either the south pole or the north pole. The magnetic forces concentrate in the stator teeth, which attract the disc sectors on the face of the rotor disc having the opposite polarization. The stepwise the angular displacement of the rotor discs and by extension the central shaft to which the rotor is affixed, can be driven by alternating polarization of the two stators.

The rotation of the rotor may be driven in one predefined direction. It is also possible that the stepper motor is driven be bidirectional.

The teeth of the stator may be irregularly spaced. In this embodiment, all radial portions of the teeth of a stator would still be positioned to interact with the disc sectors of a rotor disc each having same magnetic pole, however, at least one of the teeth may slightly overlap with an adjacent disc sector of the opposite pole. An irregular spacing between the teeth generates a torque even when no current is temporarily provided to the coils. The so generated torque smoothens the abrupt, stepwise movement of the rotor according to the provision of alternating current. As a result, the rotational speed of the rotor is rendered steadier. The stepper motor runs smoother, without stagnation.

An irregular spacing of the teeth furthermore provides the advantage, that the rotor can be easily turned or adjusted in its position when no current is supplied to the stepper motor. In embodiments where the regularly spaced teeth are fully aligned with the polarised rotor disc sectors, a resistance needs to be overcome to move the rotor sections out of their aligned positions. This is not the case when the alignment is incomplete, i.e. if at least some of the teeth are superposed with unequally sized portions of two adjacent disc sectors, as is for example the case with irregularly spaced teeth. An incomplete alignment results in a less stable angular position of the rotor, such that this position can be changed smoothly, for example manually by rotating the central shaft, when no current is applied.

In a preferred embodiment, electric tracks for transmitting input / output signals to and optionally from the stepper motor are arranged in one or more flexible printed circuit boards (PCB). The tracks may for example be arranged in a front flexible PCB and a rear flexible PCB.

One or both end portions of a flexible PCBs may have an anulus shape, preferably matching the face is the cylindrical coil on which they are arranged. In this embodiment, the central shaft passes through the annular end portion of the flexible PCB.

One or both end portions of the flexible PCBs may also have a curved shape, which preferably match the curvature of the face of the cylindrical coil on which they are arranged.

A flexible PCB may have different kinds of ends, for example an annulus shaped end portion and another curved end portion.

Portions of the flexible PCB may be accommodated along the length of a stator into recesses on the cylindrical surface of a stators

The tracks of the flexible PCB may be electrically connected to each other and/or to the electromagnetic coil.

Electrical connections may for example be provided by soldering.

The front flexible PCB may comprise a first end portion, which is electrically connected with a first face of the front coil and with a second end portion, which is arranged on a second face of the rear stator.

The first sides of the coils, as used herein, are being the sides facing the rotor disc. The second sides of the coils, as used herein, are the sides facing away from the rotor discs.

The second end portion of the front flexible PCB is preferably affixed onto the second face of the rear stator, for example with a suitable adhesive.

The rear flexible PCB may be configured to provide current to the coils. For this purpose, the rear flexible PCB should be electrically connected to the rear coil, the front flexible PCB and to an external power source.

The rear flexible PCB may comprise a first end portion for electrically connecting the PCB with the first face of the one coil, the rear coil, which is accommodated in a rear stator.

The second end portion of the rear flex is preferably configured to input and, optionally, to output electrical signals.

In one embodiment, the rear flexible PCB further comprises an intermediate annular portion, suitable for electrically connecting to the front flexible PCB. The intermediate portion may be arranged on, preferably fixed onto, a second face of the rear stator, wherein the central shaft passes through said annular portion.

The intermediate section may for example be arranged on a stator yoke or a suitable covering member, for example a flange disc, covering the second face of the stator.

The intermediate section should be arranged on or attached to the second face of the rear stator, or its suitable cover, without establishing an electrical connection with the stator.

The second end of the front flexible PCB is preferably electrically connected to, for example soldered to, the intermediate section of the rear flexible PCT.

In this embodiment, the rear flexible PCB preferably comprises a first longitudinal portion arranged parallel to the central shaft and extending from the first end portion to the intermediate portion of the rear flexible PCB along the outer surface of the rear stator.

The rear flexible PCB of this embodiment may further comprise a second longitudinal portion folded over the edge of the second face of the rear stator towards the front stator. The second longitudinal portion may extend longitudinally along the assembled motor beyond the front stator, such that the free end of the rear flexible PCB is accessible for external electrical connection.

The assembled stepper motor may be encompassed by an outer sheath. The sheath is preferably of hollow cylindrical shape for englobing the stators, the rotor, the spacer, and, optionally, at least partially the electrical wires or the flexible PCBs. Preferably the two stators, the rotor, and the spacer are completely covered by the outer sheath. The outer sheath should preferably made form a protective, durable material, such as stainless steel To keep the dimensions of the stepper motor compact, the outer sheath should have a thickness of 0.05 mm to 0.5 mm, or 0.1 mm to 0.3 mm. Preferably the outer sheath should be water-proof or water-resistant.

The stepper motor of this invention may further comprise an angular encoder. The angular encoder may for example be mounted in on a flexible PCB. The encoder may be used to determine the angular velocity, angular acceleration, and/or the angular position of the central shaft, respectively the rotor.

The stepper motor of this invention may further comprise a magnetic field sensor. The magnetic field sensor may be mounted on a flexible PCB. The sensor provides the advantage that the field strength can be monitored. This way the current applied to the coils can be adjusted to reach a desired field strength. Monitoring the magnetic field strength provides the additional advantage, that defects in the coils may readily be detected. The coils can therefore be repaired or exchanged to ensure continued performance of the motor.

The stepper motor of this invention is a compact stepper motor. Preferably the stepper motor has a maximum outer diameter of 3 mm to 70 mm, preferably of 4.5mm to 22 mm.

This invention also concerns a method for assembling the stepper motor described herein.

### Short description of the drawings

Exemplar embodiments of the invention are disclosed in the description and illustrated by the drawings in which:
**Figure 1** schematically illustrates a three-dimensional exploded view of an embodiment of the stepper motor according to this invention;
**Figure 2A** shows a three-dimensional exploded view of the rotor discs and the central shaft;
**Figure 2B** shows a three-dimensional view of the rotor discs rotationally fixes around the central shaft;
**Figure 3A** shows a three-dimensional exploded view of the front stator and the front coil;
**Figure 3B** shows a three-dimensional view of the assembled front stator of Figure 3A;
**Figure 4A** shows a three-dimensional exploded view of the rear stator and rear coil;
**Figure 4B** shows a three-dimensional view of the assembled rear stator of Figure 4A with the first longitudinal section following the guide recess towards the second face of the stator;
**Figure 4C** shows a three-dimensional view of the assembled rear stator of Figure 4A, in which the intermediate portion of the rear flexible PCB is arranged on the second face (not visible) of the stator;
**Figure 5A** shows a three-dimensional view from the rear end of an embodiment of an assembled stepper motor with an outer sheath according to this invention; and
**Figure 5B** shows a three-dimensional view from the front end of an embodiment of an assembled stepper motor with an outer sheath according to this invention.

### Examples of embodiments of the present invention

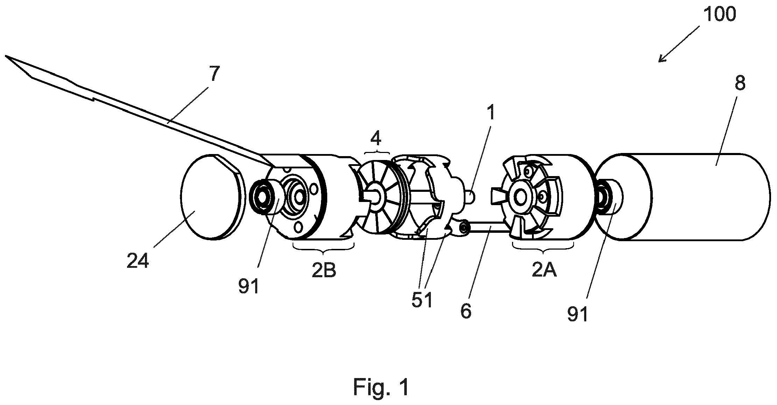

A possible embodiment of a stepper motor 100 according to this invention is shown in Figure 1. The figure depicts a schematic exploded view of the motor. The embodiment comprised a rotor 4 with a plurality of disc sectors, in the shown example ten disc sectors. The regions are magnetized alternatingly with opposing poles, north and south poles. The rotor is rotationally fixed to a central shaft 1. The central shaft 1 passes along the entire length of the stepper motor 100.

The central shaft 1 passes axially through a front stator 2A and a rear stator 2B, each comprising a stator yoke 20A, 20B. The two stators each accommodate a coil, a front coil, respectively a rear coil. The central shaft 1 passes through the core of each coil, such that it can rotate axially inside the coils.

The stepper motor depicted here comprises a front flexible PCB 6 and a rear flexible PCB 7. The stepper motor further comprises stator support members 91, for example bearings.

The outward faces of the rear 20B and/or the front stator yoke 20A are preferably covered by a covering member 24. The covering member may serve as a surface to connect the motor to an external structure. The covering member 24 may also function as an interface to gear boxes, adapters, or other units.

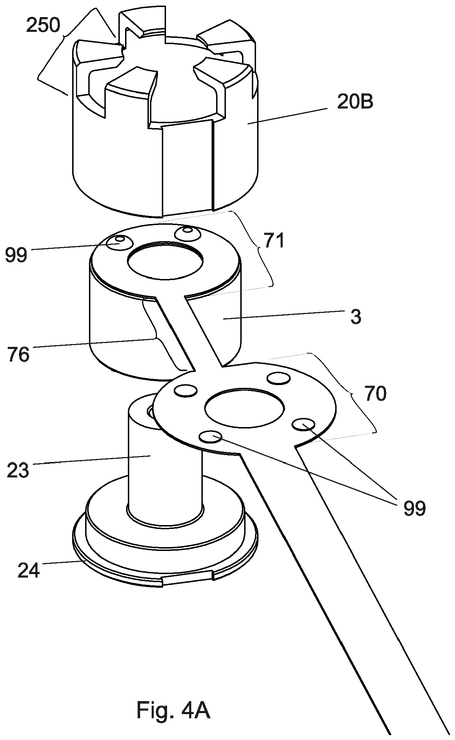

The covering member is preferably disc shaped. The covering member may be a supporting flange member, as shown in Figures 1 and 4A.

The distance between the two stators as well as their angular alignment to each other is secured by a spacer 5. The spacer shown here has in central annulus portion and protrusions 51 which are each compatible with area between two adjacent stator teeth. The shape of the protrusions 51 is complimentary to the shape of the recesses between the stator teeth 250, such that the spacer 5 matches the shape of both stators. As a result, it fixes the stators in their angular position.

The spacer 5 is however not limited to the particular shape shown in this figure. The number of protrusions of the spacer may for example be less than the number of recesses between the stator teeth. It is also possible to foresee alternative protrusions and recesses in spacer and the stators to fix the angular position of the stators in respect of each other.

The spacer 5 should be dimensioned such that it creates distance between the stators 2A, 2B, which is sufficiently large to permit layering of the rotor 4 between the stators. The spacer 5 should be dimensioned and arranged such that neither of the rotor faces contacts a stator 2A, 2B. A gap between the rotor 4 and the stator phases 2A, 2B is important, to avoid that the polarized stator teeth stick to the magnetic rotor and therefore prevent rotation of the motor.

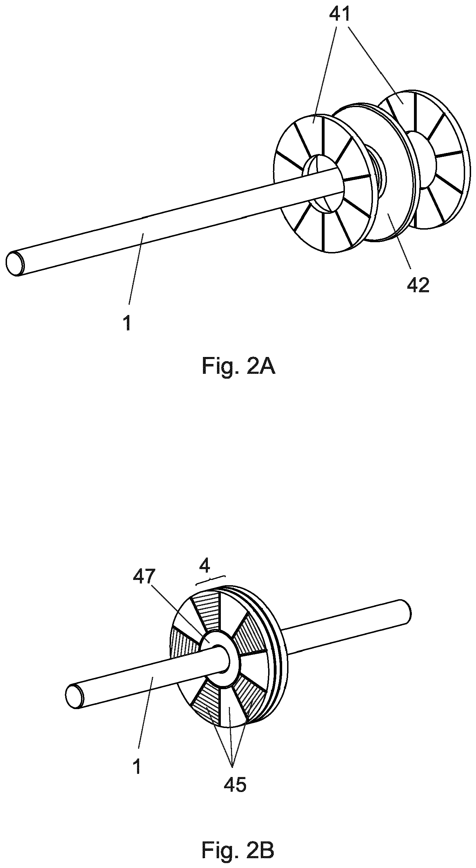

The rotor is depicted in greater detail in Figures 2A and 2B. Figure 2A shows an exploded view of the rotor, which in this embodiment comprises three discs. The two outer discs 41 each comprise magnetised disc sectors 45 of alternating polarities. The central disc 42 separated the magnetic discs 41 and is preferably made of magnetic material, such as ferromagnetic material like steel or iron.

This is shown in Figure 2B, depicting an assembled rotor 4 fixed on the central shaft 1. Disc sectors 45 providing one magnetic pole, for example the north pole, are shown in white, while disc sectors 45 providing the other magnetic pole, for example the south pole, are shown as striped regions.

In the assembled motor the rotor discs may be fixed to the central shaft by means of a rotor support member 47.

Possible embodiments of the front and the rear stator are shown in greater detail in the subsequent figures.

In these embodiments, the stator coils 3 are electrically connected through flexible PCBs 6, 7, which is a preferred option for providing current to the coils. While the flexible PCBs are used to provide input signals and electrical current to the coils, the flexible PCBs may also be used to receive signals form electric components or sensors positioned in the motor and to output the signals through an external connection.

The flexible PCBs may for example comprise angular encoders or be connected to angular encoders. The flexible PCBs my also comprise or be connected to sensors, for example magnetic field sensors or temperature sensors.

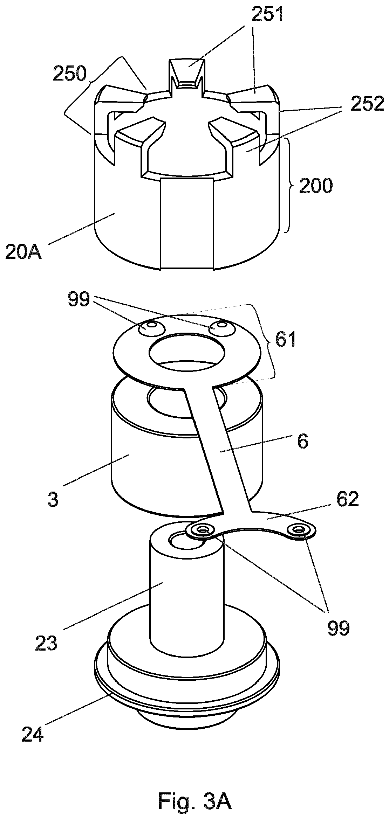

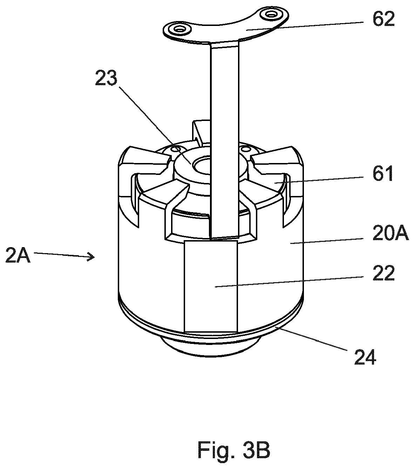

Figures 3A and 3B show three-dimensional views of a possible embodiment of the front stator 2A with a front flexible PCB 6.

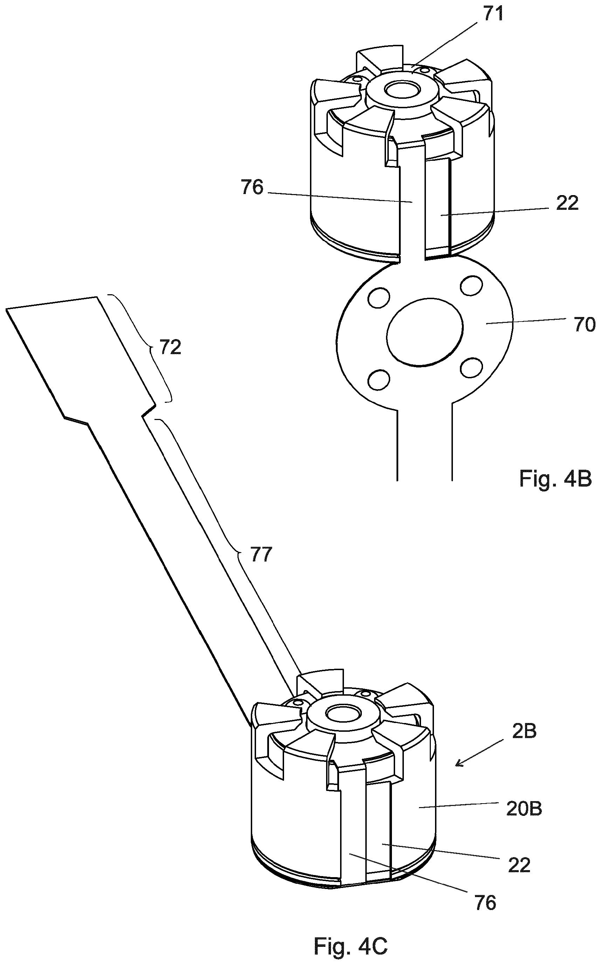

Figures 4A, 4B, and 4C show a possible embodiment of the rear stator.

The front stator 2A and the rear stator 2B each comprise a stator yoke 20A, 20B. The front stator 2A and the rear stator 2B of the shown embodiment furthermore comprise a stator flange with an axial cylindrical flange member 23 around which the electromagnetic coil 3 is placed. In the depicted embodiments the stator flanges each also comprise a disc-shaped support member 24 for supporting the mounted the coil. The support member 24 acts as a a covering member of the stator.

In alternative embodiments the cylindrical flange member 23 and the covering member are provided as separate elements, which may optionally be reversibly connected to each other.

The stator yokes 20A, 20B are substantially cylindrical in shape with a recess 22 along its outer surface for guiding a part a flexible PCB in the assembled motor.

The stator yokes 20A, 20B each comprise an annular portion 200, which is oriented away from the rotor in the assembled motor, and a plurality of teeth 250, in the shown example 5 teeth for each stator yoke 20A, 20B.

The teeth of this embodiment have a longitudinal portion 252 extending from the cylindrical lateral surface of the annular portion towards the rotor in the assembled motor. The stator teeth 250 further comprise radial portions 251, which each extend perpendicularly from a longitudinal portion 252 towards the geometrical central axis of the stator, respectively toward the central shaft 1 in the assembled motor.

A possible embodiment for a front flexible PCB 6 is also depicted in Figures 3A and 3B. The front flexible PCB 6 comprises a first annulus-shaped end portion 61 and a second curved end portion 62. The two end portions are connected by an intermediate longitudinal portion.

The first end portion 61 is electrically connected to the first face of the electromagnetic coil, which is the face facing the rotor 4 in the assembled motor.

In general, electrical connections may be established by soldering flexible PCBs to each other or to a coil. To this end, the end sections may comprise soldering points 99.

Figure 3B depicts the assembled front stator with the first end of the front flexible PCB soldered onto the first face of the coil. The intermediate portion of the front flexible PCB 6 is folded upwardly. This intermediate portion is arranged in longitudinal direction of the stepper motor in direction of the rear stator in the assembled motor. The intermediate portion should be dimensioned such that the second end portion 62 of the front flexible PCB can arranged be arranged on the second face of the rear stator, which is the face facing away from the rotor in the assembled motor.

The rear stator yoke 20B depicted in these Figures 4A, 4B, and 4C is identical to the front stator yoke 20A. Both stators 2A, 2B have an axial cylindrical flange member 23, however the outer face of disc-shaped flange member 24 of the rear stator is preferably flat. A flat outer face is better suited for arranging of fixing portions of the front and the rear flexible PCB, as is the case in the embodiment depicted in the Figures, in particular Figure 1. The support member 24 of the rear stator yoke also comprises a lateral recess, which may be aligned with the guiding recesses 22 of the stators to guide the longitudinal portions of the flexible PCBs.

The possible embodiment of the rear flexible PCB 7 shown in Figure 4A to 4C comprises a first annulus-shaped end potion 71, an annulus-shaped intermediate portion 70, and a second end portion 72 for external electrical connection.

A first longitudinal portion 76 extends between the first end portion 71 and the intermediate portion 70. A second longitudinal portion 77 extends between the intermediate portion 70 and the second end portion 72.

As shown in Figure 4A, the first end portion 71 is arranged on and electrically connected to the first face of the electromagnetic coil 3 accommodated in the rear stator 2B.

The first longitudinal portion 76 is folded over the edge of the first face of the coil 3 and guided by a guiding recess 22 along the surface of the rear stator yoke 20B towards its second face, which is oriented away from the rotor in the assembled motor.

The intermediate portion 70 can then be folded over the edge of the lateral cylindrical surface onto the second face of the rear stator.

The assembled rear stator 2B with rear flexible PCB 7 is shown in Figure 4C. The intermediate portion 70 is arranged on, preferably adhered to, the underside of the stator shown here, which is the second face of the stator 2B. The second longitudinal portion 77 and the second end portion 72 are free for further arrangements and connection.

The second longitudinal portion 77 may provide a required extension to connect the PCB to an external power source. Optionally, the second longitudinal portion 77 may be folded over the edge of the second face of the rear stator to be arranged longitudinally along the cylindrical surface of the assembled motor in direction of the front stator 2A and beyond. The so arranged second longitudinal portion 77 may be guided by guide recesses 22 comprised in the outer surfaces of the stator yokes 20A, 20B.

The motor may be coated by an outer sheath 8. The sheath serves to protect the motor from the environment. The sheath may be waterproof, or water resistant to protect the electromagnetic components form humidity. The outer sheath 8 is preferably of cylindrical shape, matching the shape of the rotor accommodated in it. Optionally, the sheath 8 may comprise covers 95 on either end of its cylindrical shape, such that the stepper motor may be sealed inside the sheath, with only the required wires, cable, or flexible PCB extending outwardly.

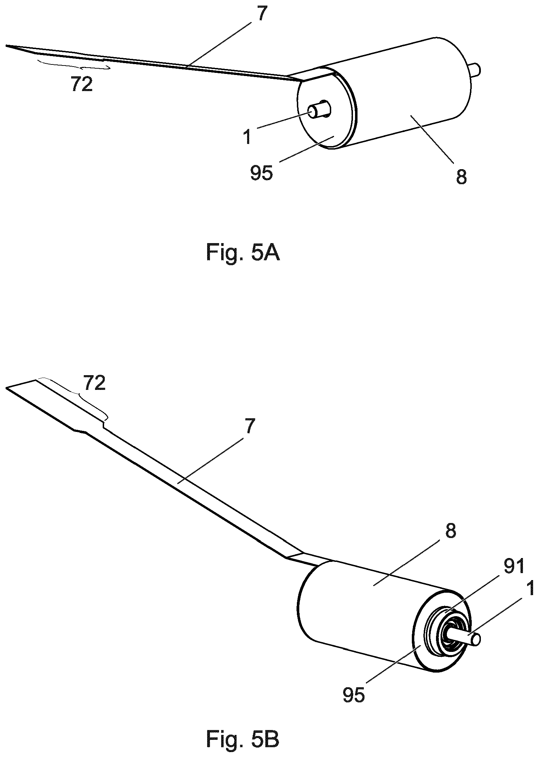

The embodiment depicted in Figures 5A and 5B shows a stepper motor contained in a sheath 8 with a cover 95. The rear flexible PCB projects outwardly through the sheath to enable electrical connection of the motor.

A two-phase stepper motor of this invention, and in particular the embodiment presented in the figures, may be assembled according to the steps set forth in the following.

For the assembly of the front stator 2A, the front flexible PCB 6, preferably its first end portion 61, is electrically connected, preferably soldered, a onto a first face of a coil 3. The coil 3 is then inserted into the front stator 2A, such that the first face of the coil 3 is adjacent to the radial portions 251 of the stator teeth.

Optionally, the coil may be mounted around the hollow cylindrical flange member 23 of a stator yoke 20A, 20B, into which the central shaft 1 is inserted.

For the assembly of the front stator 2B, the rear flexible PCB 7, preferably its first end portion 71, is electrically connected, preferably soldered, a onto a first face of the second coil 3. The second coil is then inserted into the rear stator, such that the first face of the coil is adjacent to the radial portions of the stator teeth.

The central shaft 1 is then inserted axially in the stator through the core of the coil accommodated in the front stator.

In a subsequent step the rotor 4 is mounted onto the central shaft 1, such that it is rotationally fixed to the shaft, such that the radial portions of the teeth 251 of the front stator face the rotor, and such that the rotor 4 does not contact said radial portions.

Optionally, a spacer member may be temporarily inserted to ensure that a minimal distance between the rotor 4 and the front stator is maintained during their assembly.

The spacer 5 can then be arranged onto the front stator 2A and around the rotor 4. The spacer 5 should be disposed in such a way, that the front flexible PCB 6, in particular its longitudinal portion, protrudes outwardly between the front stator 2A and the spacer 5.

The rear stator 2B accommodating the other coil 3 onto the shaft, such that the radial portions of the teeth of the rear stator face the rotor, such that the rotor does not contact said radial portions, and such that the rear flexible PCB protrudes outwardly between the rear stator and the spacer.

Optionally, the coil may be mounted around the hollow cylindrical flange member 23 of a stator 2A, 2B, into which the central shaft 1 is inserted. The flange member 23 should comprise a central opening through which the central shaft 1 may pass. Preferably the flange member 23 of the rear stator as a support member 24 with a flat disc-shaped outer surface which is suitable for covering the second face of the open cylindrical shape of the rear stator. The flat disc-shaped outer surface should be suitable for attaching flexible PCBs.

Once the two stators 2A, 2B have been mounted on the central shaft 1 the front flexible PCB 6 and the rear flexible PCB 7 are folded towards the second face of the rear stator 2B, which is the face facing away from the rotor 4. The second end portion 62 of the front flexible PCB and an intermediate portion 70 of the rear flexible PCB are the arranged on said second face of the rear stator. The second face of the rear stator may be the outer surface of the support member 24. Preferably the intermediate section 70 of the rear flexible PCB is fixed onto the second face of the rear stator, for example by means of an adhesive.

The front flexible PCB 6, preferably the second end 62 of the front flexible PCB, is then electrically connected, preferably soldered, onto the rear flexible PCB 7, preferably the intermediate portion 70 of the rear flexible PCB.

A portion of the rear flexible PCB extends from the second face of the rear stator 2B, such as to enable electrical connection with an external device.

Optionally, the rear flexible PCB 7 may be folded over the edge of the second face of the rear stator 2B, such that the rear flexible PCB 7, preferably the second longitudinal portion of the rear flexible PCB 77, extends longitudinally along the assembled motor beyond the front stator 2A. The rear flexible PCB 7 may be guided along the lateral surface of the substantially cylindrical assembled motor by guide recesses 22.

The so assembled motor may optionally be inserted into the outer sheath 8. The portion of the rear flexible PCB 7 which is folded backwards over the rear stator edge to run along the length of the assembled stepper motor is preferably also contained inside the outer sheath 8.

### Reference numbers used in the figures

- 1: central axis
- 2: stator
- 2A: front stator
- 2B: rear stator
- 3: coil
- 3A: front coil
- 3B: rear coil
- 4: rotor
- 5: spacer
- 51: spacer protrusions
- 20A: front stator yoke
- 20B: rear stator yoke
- 22: guide recess
- 23: cylindrical flange member
- 24: support flange member
- 200: annular portion of stator yoke
- 250: stator tooth
- 251: longitudinal portion of stator tooth
- 252: radial portion of stator tooth
- 41: magnetic rotor disc
- 42: central rotor disc
- 45: disc sectors of magnetic rotor disc
- 47: support for rotor discs
- 6: front flexible PCB
- 61: first end portion of front flexible PCB
- 62: second end portion of front flexible PCB
- 7: rear flexible PCB
- 70: intermediate portion of rear flexible PCB
- 71: first end portion of rear flexible PCB
- 72: second end portion of rear flexible PCB
- 76: first longitudinal portion of rear flexible PCB
- 77: second longitudinal portion of rear flexible PCB
- 8: outer sheath
- 91: bearing
- 93: rear flange disc
- 95: motor cover disc
- 99: soldering points
- 100: stepper motor

## Claims

1. A two-phased stepper motor (100) comprising
- a central shaft (1),
- two coils (3),
- two ferromagnetic stators (2A, 2B), each accommodating one of the coils (3),
said central shaft (1) passing through each of the two coils (3) such as to permit a rotation of said central shaft (1) within said stators (2A, 2B),
- a rotor (4) rotationally fixed on said central shaft (1) and positioned between the two stators (2A, 2B), said rotor (4) having two faces, each face being magnetized, and
- a spacer (5) arranged between the stators (2A, 2B) for maintaining the two stators at a fixed minimal distance from each other,
wherein each of the two stators (2A, 2B) comprises an annular portion arranged around one of the coils and at least two teeth (250) extending from the annular portion, each tooth comprising a radial portion (251) extending radially between one of the coils (3) and the rotor (4), in direction of the central shaft (1).

2. The stepper motor of claim 1, wherein the teeth (250) each comprise a longitudinal portion (252) extending as a continuation of the annular portion of the stator (2A, 2B) parallel to the central shaft (1) towards the rotor (4), and wherein the radial portion (251) is perpendicular to the longitudinal portion (252).

3. The stepper motor of any of claims 1 to 2, the two stators (2A, 2B) being identical, wherein the teeth of one stator are angularly offset with respect to the teeth of the other stator.

4. The stepper motor of any of claims 1 to 3, wherein the spacer (5) comprises an annular portion made from isolating material.

5. The stepper motor of any of claims 1 to 4, wherein the spacer (5) is arranged to maintain the angular offset of the teeth (250) of the two stators (2A, 2B), such that the angular position of the stators in respect to each other is fixed.

6. The stepper motor of any of claims 1 to 5, wherein the spacer (5) has protrusions (51) engaged between at least one pair of longitudinal portions (252) of adjacent teeth of each stator.

7. The stepper motor of any of claims 1 to 6, wherein the rotor (4) comprises two magnetic discs (41) each comprising disc sectors (45), wherein each disc sector (45) is polarized to a first magnetic pole, for example the north pole, and wherein its adjacent magnetic regions are polarized to the opposite magnetic pole, for example the south pole, such that magnetic south pole and magnetic north pole are alternating in the disc sectors (45) of the magnetic rotor discs (41).

8. The stepper motor of claim 7, wherein the radially magnetized rotor discs (41) are angularly shifted in respect of each other.

9. The stepper motor of any of claims 1 to 8, wherein the teeth (250) of the stators (2A, 2B) are irregularly spaced.

10. The stepper motor of any of claims 1 to 9, wherein the two coils (3) are each connected to electric wires arranged in one or more flexible printed circuit boards (PCBs) (6, 7).

11. The stepper motor of claim 9, comprising a front flexible PCB (6) with a first end portion (61), which is electrically connected with, for example soldered onto, a first face of the coil accommodated in one of the stators, which is the front stator (2A), the first face of the coils or the stators being the faces facing the rotor disc, and with a second end portion (62), which is arranged on, preferably fixed onto, a second face of the other stator, which is the rear stator (2B), the second faces of the coils or the stators being the faces facing away from the rotor discs (41).

12. The stepper motor of claim 10 or 11, further comprising a rear flexible PCB (7) configured to provide current to the coils (3), wherein the rear flexible PCB (7) is electrically connected to the front flexible PCB (6), wherein the first end portion (71) of said rear flexible PCB is electrically connected with the first face of the coil accommodated in the rear stator (2B), and wherein the second end portion (72) of the rear flexible PCB is configured to input and, optionally, to output electrical signals.

13. The stepper motor of claim 12, the rear flexible PCB (7) further comprising an annulus-shaped intermediate portion (70), which is electrically connected with the front flexible PCB (6), and which is arranged on, preferably fixed onto, a second face of the rear stator (2B), wherein the central shaft (1) passes through said intermediate portion (70).

14. The stepper motor of claim 13, the rear flexible PCB (7) further comprising a first longitudinal portion (76) arranged parallel to the central shaft (1) and extending from the first end portion (71) to the intermediate portion (70) of the rear flexible PCB along the outer surface of the rear stator (2B), and a second longitudinal portion (77) extending over the edge of the second face of the rear stator (2B), such that the free end (72) of the rear flexible PCB is accessible for external electrical connection.

15. A method for assembling the stepper motor (100) of any of the claims 1 to 14, comprising the steps of
(i) electrically connecting, preferably soldering, a front flexible PCB (6) onto a first face of a coil, which is the front coil;
(ii) inserting the front coil into one stator, the front stator (2A), such that the first face of the front coil is adjacent to radial portions (251) of stator teeth, said radial portions being directed radially inwards from the outer perimeter of the front stator (2A);
(iii) electrically connecting, preferably soldering, a rear flexible PCB (7) onto a first face of the other coil, which is the rear coil;
(iv) inserting the rear coil into a second stator, which is the rear stator (2B), such that the first face of the rear coil is adjacent to radial portions (251) of stator teeth, said radial portions being directed radially inwards from the outer perimeter of the rear stator (2B);
wherein steps (i) and (ii) may also be performed after steps (iii) and (iv),
(v) mounting the front stator (2A) with the front coil around a central shaft (1);
(vi) rotationally fixing a rotor (4) to the central shaft (1), such that the radial portions (251) of the teeth of the front stator (2A) face the rotor (4) and such that the rotor does not contact said radial portions (251),
(vii) arranging a spacer (5) onto the front stator (2A) and around the rotor (4), such that the front flexible PCB (6) protrudes outwardly between the front stator (2A) and the spacer (5);
(viii) mounting the rear stator (2B) with the rear coil around the central shaft (1), such that the radial portions of the teeth (251) of the rear stator face the rotor (4), such that the rotor (4) does not contact said radial portions (251), and such that the rear flexible PCB (7) protrudes outwardly between the rear stator (2B) and the spacer (5);
(ix) folding the front flexible PCB (6) and the rear flexible PCB (7) towards the second face of the rear stator (2B), said second face facing away from the rotor (4);
(x) arranging the free end portion (62) of the front flexible PCB (6) and an intermediate portion (70) of the rear flexible PCB (7) on said second face of the rear stator (2B);
(xi) electrically connecting the so arranged free end (62) of the front flexible PCB with the so arranged intermediate portion (70) of the rear flexible PCB.
